# EUROPEAN PATENT APPLICATION

(11) **EP 1 990 547 A2**
(43) Date of publication of application: **12.11.2008**
(21) Application number: 08155859.5
(22) Date of filing: 08.05.2008
(51) Int. Cl.: F16B 2/06, F16B 37/08

(54) **Structural beam clamps and connectors**

(30) Priority: 09.05.2007 US 916909 P
(71) Applicant: Erico International Corporation, Solon, OH 44139 (US)
(72) Inventor: Olle, Raymond M., Brecksville, OH 44141 (US); Mominee, Daniel S., Chandler, AZ 85249 (US); Scholl, Charles T., Shaker Heights, OH 44120 (US); Wilson, Eric J., Solon, OH 44139 (US); Laughlin, Raymond S., Middlefield, OH 44062 (US); Osborn, Eric C., Medina, OH 44256 (US)
(74) Representative: Gille Hrabal Struck Neidlein Prop Roos

(57) **Abstract**

A structural clamp or connector has a retaining mechanism for engaging at least one threaded rod or threaded rod end by pressing the threads of the threads of the rod or rod end into a threadform of a clamp body or connector body. The clamp may include one or more retaining clips for pushing the threaded rod into engagement with threads on one side of one or more threaded holes through a clamp body of the clamp.

## Description

### REFERENCE TO RELATED APPLICATIONS

This application is related to U.S. Provisional Patent Application No. 60/736,363, filed November 14, 2005, to U.S. Provisional Patent Application No. 60/749,227, filed December 9, 2005, and to U.S. Patent Application No. 11/598,862, filed November 14, 2006. The descriptions and drawings of the foregoing applications are hereby incorporated by reference in their entireties.

### BACKGROUND OF THE INVENTION

### TECHNICAL FIELD OF THE INVENTION

This invention relates generally to structural clamps and connectors, and more particularly to clamps and connectors using primarily threaded rod for fixing and hanging a variety of items such as pipe, lighting and heating fixtures, duct work, cables or cable trays from a variety of structural members such as beams, struts, Z-purlins, T-bars, or other structural shapes.

### DESCRIPTION OF THE RELATED ART

Traditional pipe hanger assemblies in the plumbing and fire protection markets typically consist of a suitably sized pipe hanger, a length of threaded rod, and a beam clamp. The beam clamps are primarily used to provide a means of connection to the building structural steel. They also find application in the support of other utilities and mechanical systems to a structure.

A traditional beam clamp is made from a C-shape casting. Within the C-shape is a tapped hole for a setscrew for attachment to a beam flange. Along the back of the C-shape are one or two axially aligned threaded holes to accept a threaded rod.

One difficulty arises in installation of such clamps if the holes and threads are misaligned. Even under the best circumstances, the end user is required to screw the threaded rod, one turn at a time, into the beam clamp to the desired location. These operations are difficult and very time consuming. One common practice is to cut the threaded rod to length using a handsaw or other saw. The threads at the cut end are often less than optimal, requiring some amount of dressing (further modification) to facilitate threading into the body of the beam clamp. Failure to properly dress the threads means that the installer must use pliers or another tool to install the threaded rod, adding to the time and difficulty of completing the assembly.

Due to the continuing popularity of such clamps, it will be appreciated that it would be desirable to have improvements in such clamps, such as in ease or flexibility of use, reduced cost, reduced weight, increased performance, and/or with regard to other factors.

### SUMMARY OF THE INVENTION

According to an aspect of the invention, a structural clamp has a retaining mechanism, for securing the clamp to a threaded rod, that includes a threaded plug that fits into an opening in the back of a clamp body of the clamp, and a pin the presses threads of the plug in against the threads of a threaded rod that runs through the clamp body and is secured to the structural clamp.

According to another aspect of the invention, a structural clamp has a retaining mechanism, for securing the clamp to a threaded rod, that includes an offset threaded hole in a clamp body, and a retaining clip to press the threaded rod against the threaded hole. The offset threaded hole has its axis offset from a smooth hole in the clamp body that the threaded rod also passes through. Part of the retaining clip is placed in the offset threaded hole, and presses the threaded rod into threads on one side of the threaded hole, securing the threaded rod to the clamp.

According to yet another aspect of the invention, a structural clamp has a retaining clip used to retain a threaded rod in a notch in a back surface of a clamp body of the clamp. The retaining clip clips or slides onto ramp protrusions on side surfaces of the clamp body. The retaining clip has internal sloped surfaces that mate with the ramps.

According to still another aspect of the invention, a hybrid threadform is used to allow a single thread to engage fasteners of multiple pitches. In one example the hybrid threadform is able to engage either Imperial or metric threaded items, such as threaded rods. The hybrid threadform may have a crest-to-crest pitch spacing along the axis of the thread that is approximately the average of the two threads that the hybrid threadform can engage. The hybrid threadform has a variable thread height along the axis. The difference in thread height from one thread to the next may be proportional to the difference in pitch of the parent threads.

According to a further aspect of the invention, a connector has a retaining mechanism, for securing the connector to one or more threaded rods or threaded rod ends, that includes a threaded plug that fits into an opening in the back of a connector body of the connector, and a pin that presses threads of the plug in against the threads of one or more threaded rods or threaded rod ends that are in a hollow in the connector body.

According to a still further aspect of the invention, a connector has a retaining clip used to retain one or more threaded rods or threaded rod ends in a notch in a back surface of a connector body of the connector. The retaining clip clips or slides onto ramp protrusions on side surfaces of the connector body. The retaining clip has internal sloped surfaces that mate with the ramps.

According to another aspect of the invention, a structural clamp or connector has a retaining mechanism for engaging at least one threaded rod or threaded rod end by pressing the threads of the threads of the rod or rod end into a threadform of a clamp body or connector body.

According to yet another aspect of the invention, a structural clamp or connector includes: a clamp or connector body having a hollow; a plug having a threadform surface; and a pin that engages the plug to push the plug into the hollow to bear against a threaded rod in the hollow, thereby engaging the threadform surface with the threaded rod. The clamp or connector may include one or more of the following features: the pin is a wedge pin; the pin is cylindrical; the pin has a narrow end and a wide end; the pin includes a slope surface; the plug has a parallelepiped shape; the plug has a notch on a back surface opposite the threadform front surface, wherein the notch is engaged by the pin; the notch of the plug has a variable depth, with a sloped floor; the threadform surface has a hybrid thread capable of engaging threaded rods with multiple pitches; and the clamp body has holes in side walls on opposite sides of the hollow, and the pin is inserted in the side holes.

According to still another aspect of the invention, a clamp includes: a clamp body having a threaded hole; and a retainer clip fits into the hole, and pushes a threaded rod against one side of the threaded hole. The clamp may include one or more of the following features: the clip fits over a top surface of the clamp body; the clip has a front portion and a back portion; the clip front portion has a pilot end and a proximal body, wherein the pilot end is narrower and/or thinner than the proximal body; the pilot end has one or more barbs, lances, or other protrusions; the threaded rod is free to move through the threaded hole when only the pilot end is inserted into the threaded hole; the one or more barbs, lances, or other protrusions engage the threads of the threaded hole when only the pilot end is inserted in the threaded hole; the back portion has a tab; the back portion tab engages a surface of the clamp body when the clip is fully installed on the clamp body; the clamp body has a smooth hole, in addition to the threaded hole, that the threaded rod passes into; the threaded hole has a larger radius than the smooth hole; the threaded hole has its axis offset from that of the smooth hole; and the offset in the axes of the holes is substantially equal to the difference between the radii of the holes.

According to a further aspect of the invention, a clamp or connector includes: a body having a channel with a threadform; and a clip engaging the body to press a threaded rod into the threadform of the channel. The clamp or connector may include one or more of the following features: the body has wedge-shape protrusions on side surfaces that are engaged by sloped surfaces of the clip;
the wedge-shape protrusions have a taper of about 6°; the clip has a tab that engages the threads of the threaded rod when the clip is installed on the body; the clip has protrusions that engage side surfaces of the body to hold the clip in a partially-installed configuration; the channel is semicircular; and the channel is rectangular.

According to a still further aspect of the invention, a method of coupling a threaded rod and a clamp body includes the steps of: inserting the threaded rod into a threaded hole of the clamp body; and securing the threaded rod to threads on one side of the threaded hole with a portion of a clip that is inserted into the threaded hole. The method may be wherein the threaded hole is an oversized threaded hole having a diameter greater than that of the threaded rod; and wherein the inserting includes non-threading sliding of the threaded rod into the threaded hole. The method may further comprise, prior to the inserting the threaded rod, installing the clip on the clamp body, such that the clip is installed on the claim body during the inserting the threaded rod. The method of may be wherein the clip has a front portion and a back portion; wherein the clip front portion has a pilot end and a proximal body, wherein the pilot end is one or more of narrower than the proximal body and thinner than the proximal body; and wherein the installing includes inserting the pilot end of the clip into the threaded hole, such that the pilot end is in the threaded hole during the inserting the threaded rod. The method may be wherein the pilot end has one or more protrusions; and wherein the inserting the pilot end includes engaging the threads of the threaded hole. The method may be wherein the securing includes inserting at least part of the proximal body of the clip into the threaded hole. The method may be wherein the back portion has a tab; and wherein the securing includes engaging a surface of the clamp body with the tab, to aid in preventing dislodgement the clip. The method may be wherein the clamp body has a smooth hole in addition to the threaded hole; and wherein the inserting the threaded rod includes inserting the threaded rod through the smooth hole.

To the accomplishment of the foregoing and related ends, the invention comprises the features hereinafter fully described and particularly pointed out in the claims. The following description and the annexed drawings set forth in detail certain illustrative embodiments of the invention. These embodiments are indicative, however, of but a few of the various ways in which the principles of the invention may be employed. Other objects, advantages and novel features of the invention will become apparent from the following detailed description of the invention when considered in conjunction with the drawings.

### BRIEF DESCRIPTION OF THE DRAWINGS

In the accompanying drawings, which are not necessarily to scale:

Fig. 1 is an oblique view of a structural clamp in accordance with an embodiment of the present invention;

Fig. 2 is a partially exploded view of the clamp of Fig. 1;

Fig. 3 is another partially exploded view of the clamp of Fig. 1;

Fig. 4 is a side view illustrating the hybrid threadform of a plug that is part of the clamp of Fig. 1;

Fig. 5 is an illustration of the superposition of parent threads, used in configuring the hybrid threadform of Fig. 4;

Fig. 6 is a cross-sectional view illustrating the engagement of the hybrid threadform of Fig. 4 with a first object having a first thread pitch;

Fig. 7 is a cross-sectional view illustrating the engagement of the hybrid threadform of Fig. 4 with a second object having a second thread pitch;

Fig. 8 is an oblique, partially-exploded view of a connector in accordance with an embodiment of the present invention that uses the same retaining mechanism as the clamp of Fig. 1;

Fig. 9 is another partially-exploded view of the connector of Fig. 8;

Fig. 10 is an oblique view of an alternate embodiment clamp in accordance with the present invention, with the retainer clip of the clamp partially installed;

Fig. 11 is an oblique view of the clamp of Fig. 10, with the retainer clip fully installed;

Fig. 12 is a cross-sectional view of the clamp of Fig. 10, with the retainer clip partially installed;

Fig. 13 is a cross-sectional view of the clamp of Fig. 10, with the retainer clip fully installed;

Fig. 14A is an oblique view of the retainer clip of the clamp of Fig. 10;

Fig. 14B is a side view of the retainer clip of Fig. 14A;

Fig. 15A is a cross-sectional view of another alternate embodiment clamp in accordance with the present invention;

Fig. 15B is an oblique view of yet another alternate embodiment clamp in accordance with the present invention;

Fig. 15C is a cross-sectional view of still another alternate embodiment clamp in accordance with the present invention;

Fig. 15D is a cross-sectional view of another alternate embodiment clamp in accordance with the present invention;

Fig. 15E is an oblique view of yet another alternate embodiment clamp in accordance with the present invention;

Fig. 15F is a cross-sectional view of still another alternate embodiment clamp in accordance with the present invention;

Fig. 15G is a cross-sectional view of another alternate embodiment clamp in accordance with the present invention;

Fig. 15H is an oblique view of yet another alternate embodiment clamp in accordance with the present invention;

Fig. 15I is a cross-sectional view of still another alternate embodiment clamp in accordance with the present invention;

Fig. 16 is an oblique view of another alternate embodiment clamp in accordance with the present invention;

Fig. 17 is an oblique view of the clamp of Fig. 16, with the clip of the clamp partially disengaged;

Fig. 18 is an exploded view of the clamp of Fig. 16;

Fig. 19 is a view of the clip of the clamp of Fig. 16; and

Fig. 20 is an oblique view of a connector in accordance with an embodiment of the present invention, that uses the retaining mechanism of the clamp of Fig. 16.

### DETAILED DESCRIPTION

A structural clamp has a retaining mechanism for retaining a threaded rod within a hollow in a main body portion of a clamp body of the clamp. In one embodiment the retaining mechanism includes a threaded plug, and a wedge pin that presses the threads of the plug against the threaded rod within the hollow. This secures the threaded rod to the clamp. The threads on the threaded plug may be hybrid threads capable of engaging multiple pitches, for example either Imperial or metric thread pitches. The hybrid threads may also be utilized in other sorts of threaded couplings, such as in a quick coupling and a quick nut.

In another embodiment, a structural clamp includes a clip that is used to press a threaded rod into engagement with threads of an oversized threaded hole in a clamp body of the clamp. The clip may be configured to engage the clamp body prior to being fully installed. This allows relative positioning of the clamp and threaded rod with the clip in place, prior to securing the threaded rod fully using the clip.

In still another embodiment, a structural clamp has an open back with a threadform channel. A portion of the threaded rod is placed in the channel, and secured using a clip that presses the threaded rod into engagement with the threadform in the channel. The clip has curled ends that engage wedge-shape protrusions on sides of a main body portion of the clamp body. The clip is configured to press against side surfaces of the main body portion in order to hold the clip in place, even in a partially installed condition with the curled ends only partially slid onto the wedge-shape protrusions of the clamp body. This allows relative positioning of the clamp and the threaded rod with the clip in place, prior to securing the threaded rod by fully sliding the clip onto the clamp main body portion.

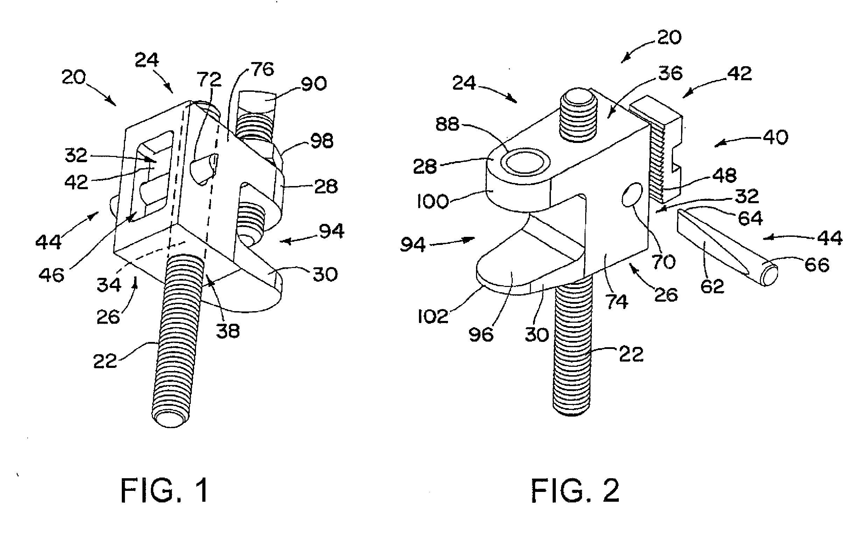

Referring initially to Figs. 1-3, a clamp 20 is used for securing objects to a threaded rod or bar 22. The clamp 20 has a clamp body 24 with a main body portion 26 having a top flange 28 and a bottom flange or platform 30 extending therefrom. The clamp body 24 may be cast from a suitable metal, such as a suitable iron or steel. Alternatively the clamp body 24 may be stamped, forged, machined, or formed by other suitable processes.

The main body portion 26 has a hollow 32 therein for receiving a portion 34 of the threaded rod 22. The threaded rod portion 34 passes through a top hole 36 in the clamp body 24, at the top of the hollow 32, and a bottom hole 38 in the clamp body 24, at the bottom of the hollow 32. The holes 36 and 38 may be circular holes with smooth sides (not threaded). The holes 36 and 38 may be coaxial, and may have substantially the same diameter.

The threaded rod portion 34 is secured within the hollow 32 by a retaining mechanism 40 that includes a threaded plug 42 and a wedge pin 44. In the illustrated embodiment the threaded plug 42 has a parallelepiped shape, although it will be appreciated that variations of the shape of the plug 42 are possible. The plug 42 may have a shape that corresponds to the shape of a back opening 46 in the clamp body 24. The back opening 46 allows access to the hollow 32.

The plug 42 has a threaded front surface 48 used for engaging the threads on the threaded rod portion 34. The threaded surface 48 is threaded in the sense that it contains ridges alternating with relative recesses (crests and troughs), capable of engaging the threads of the threaded rod portion 34. In the illustrated embodiment the threaded surface 48 is a flat surface (except for the ridges and recesses), without curvature, although it will be appreciated that the threaded surface 48 alternatively may have some curvature, such as by being curved toward the threaded rod portion 34, to better engage the threads of the threaded rod portion 34. The threads (ridges and recesses) of the threaded surface 48 may be along a width of the plug 42, substantially perpendicular to a longitudinal axis in an up-and-down direction along the height of the plug 42. Alternatively the crests and troughs of the threaded surface 48 may be tilted at an angle.

The plug 42 has a notch 50 on a back surface 52. The notch 50 is used to secure the plug 42 in place within the hollow 32, pressing the threaded front surface 48 against the threaded rod portion 34. The notch 50 does not have a uniform thickness across the width of the plug 42. Instead the notch 50 has a sloped bottom surface 54, with the notch 50 having a depth on one end 58 that is greater than its depth at the other end 60.

The plug 42 may be made by any of a variety of suitable processes. Examples include casting, machining, forming, and forging.

The wedge pin 44 is the part of the retaining mechanism 40 that engages the notch 50 to secure the plug 42 within the hollow 32. The wedge pin 44 is cylindrical, with a sloped surface 62. The sloped surface 62 has a shape and orientation that corresponds to the shape of a tilted plane intersecting a right circular cylinder. The slope surface 62 provides the wedge pin 44 with a narrow end 64 and a wide end 66. The cross-section of the wedge pin 44 is a segment of a circle at the narrow end 64, and is circular at the wide end 66. The pin 44 is inserted in a pair of side holes 70 and 72 in the clamp body 24. The side holes 70 and 72 may be substantially identical coaxial circular holes that provide access to the hollow 32 from side surfaces 74 and 76 of the clamp body 24. The side holes 70 and 72 may be aligned in a direction that is substantially perpendicular to the alignment of the top and bottom through holes 36 and 38.

The pin sloped surface 62 engages the notch sloped surface 54 when the narrow end 64 of the wedge pin 44 is inserted into one of the side holes 70 and 72. The wedge pin sloped surface 62 engages and presses against the notch sloped surface 54 as the pin 44 is inserted further. This presses the plug 42 further into the hollow 32, which in turn causes the threaded surface 48 to engage the threads of the rod portion 34. When the pin 44 is fully inserted, the narrow pin end 64 is in one of the holes 70 and 72, and the wide pin end 66 is in the other of the holes 70 and 72. When installed, parts of the pin 44 extend beyond both of the side surfaces 74 and 76 of the clamp body 24. Friction between the notch sloped surface 54 and the wedge pin sloped surface 62 prevents inadvertent dislodgement of the pin 44.

The top flange 28 has a central threaded hole 88 for receiving a clamp screw 90. The clamp screw 90 engages the threaded hole 88, directed toward a flat upper surface 96 of the bottom flange 30. The clamp screw 90 is used to secure a structural member, such as a beam flange, in a jaw opening 94 between the top flange 28 and the bottom flange upper surface 96. A clamp screw locknut 98 may be used to aid in locking the clamp screw 90 in place.

The bottom flange 30 protrudes further from the main body portion 26 than does the top flange 28. The top flange 28 has a rounded distal end 100, and the bottom flange 30 has a rounded distal end 102.

The various clamp body holes 36, 38, 70, 72, and 88 may be made by any of a variety of suitable methods. Examples of such methods include drilling or punching. The threads of the threaded hole 88 may be formed by a suitable tapping operation.

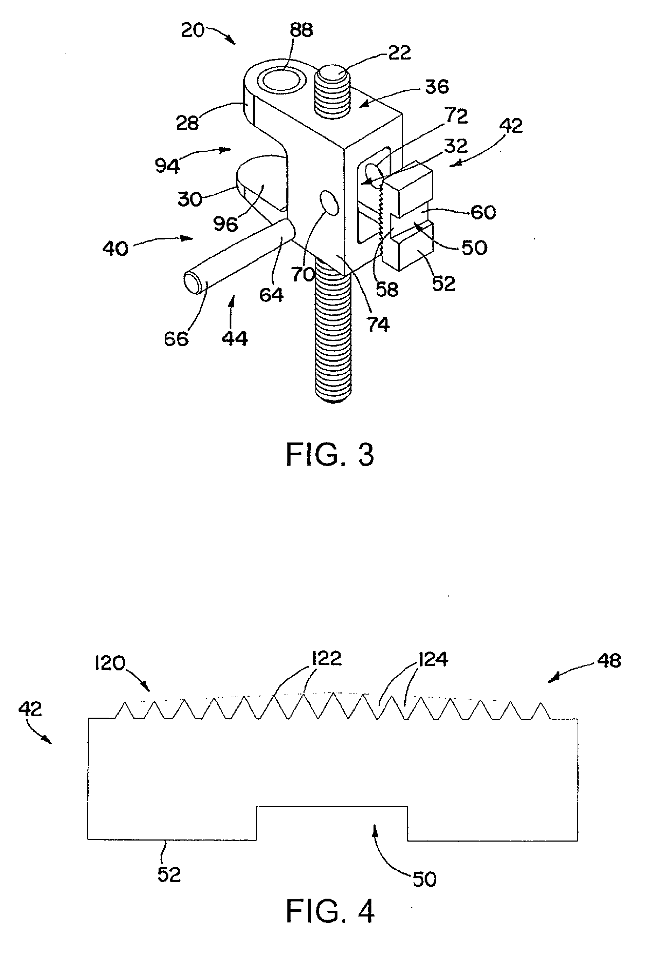

Turning now in addition to Fig. 4, further details are given of a hybrid threadform 120 that is used for the threaded surface 48 of the plug 42. The hybrid threadform 120 has a series of crests 122 and troughs 124 configured to allow engagement with multiple pitches of threads. For example, the hybrid threadform 120 may be configured to allow use of either Imperial or metric threaded rod.

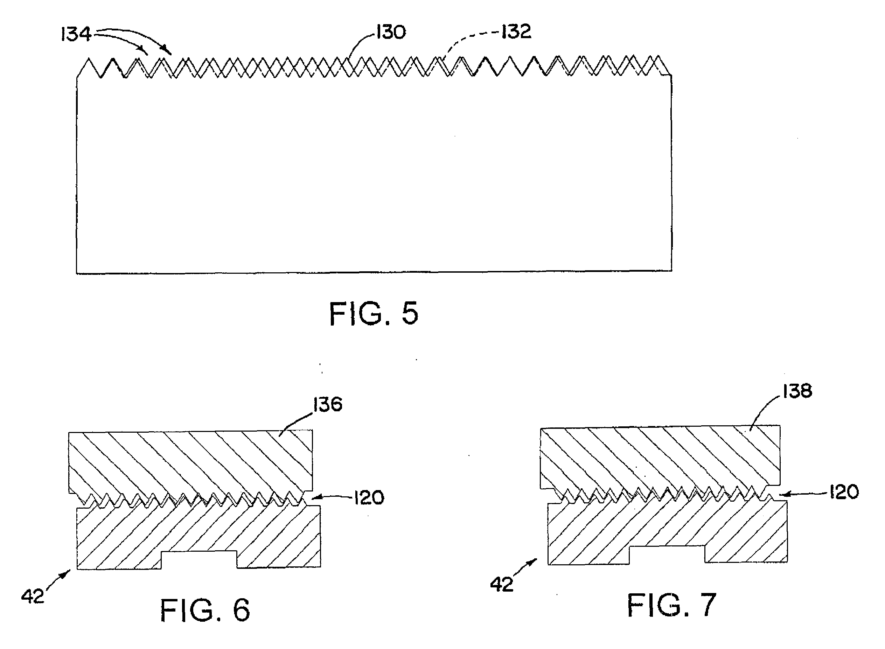

As illustrated in Fig. 5, the threadform 120 is created by overlaying the two parent threads 130 and 132 that it is to be configured to engage. The overlaying of the parent threads 130 and 132 defines a negative space 134 into which neither of the parent threads 130 and 132 intrudes. The negative space 134 left from the superposition of the two parent threads defines the potential space in which the hybrid threadform can exist. This potential space is geometrically similar to the parent threads that comprise it, but different in size. The pitch spacing (crest to crest spacing along the axis of the fastener) of the hybrid thread may be about the average of the pitches of the two parent threads comprising it. The hybrid threadform 120 has a variable thread height. The difference in thread height of the hybrid threadform 120 from one thread to the next may be proportional to the difference in pitch of the parent threads.

The center of the hybrid threadform 120 illustrated in Fig. 4 most closely matches the threads of the parent threads that the hybrid threadform 120 is configured to engage. This is the location wherein the thread height is the greatest. The illustrated hybrid threadform 120 may be repeated to create a larger threadform of indeterminate length. Some modification of the potential space may be necessary in regions where the crests and roots of the parent threadforms are approximately 180° out of phase. In this out-of-phase region threads of small thread height may be omitted. In some instances other threads may be deleted, so as to create a skip-tooth thread configuration in which the hybrid threadform 120 does not engage every thread of the threaded rod that the threadform 120 engages.

Figs. 6 and 7 illustrate the mating of two objects 136 and 138, with different thread pitches, with a single hybrid threadform 120. The threads of the objects 136 and 138 are located in different parts of the spaces between the threads of the hybrid threadform 120, but both mate with the hybrid threadform.

The hybrid threadform 120 may be placed on a flat surface of the plug 42, such as the flat threaded surface 48. Such a flat surface 48 engages the threaded rod portion 34 tangentially. As noted above, the threaded surface 48 may alternatively be curved, even taking a semicircular form. In the flat or semicircular forms, a lead angle need not be applied to the threads of the hybrid threadform 120. The thread path may be tangent and perpendicular to the threaded rod 22, or alternatively tangent to the threaded rod 22 and at an angle similar to the lead angle of the parent threads.

It will be appreciated that the procedure described above for creating a hybrid threadform for two parent threads may be extendable to configuring a hybrid threadform for three or more closely spaced thread pitches. A hybrid threadform for three or more threads may utilize the above procedure to create a hybrid threadform that is suitable for the two parent threads with the pitches at the extremes of the groups. This hybrid threadform may then be modified to allow skipping of individual crests (teeth) in regions where one or more of the intermediate parent threads is out of phase with the initial hybrid threadform.

It will be appreciated that the threaded plug surface 48 does not necessarily involve a hybrid threadform such as the hybrid threadform 120. The hybrid threadform advantageously allows the plug 42 to be used with different types of threaded rods, having threads with different pitches. Although there is only partial engagement between the hybrid threadform 120 and the threads of the threaded rod portion 34, this engagement may be sufficient to secure the clamp 20 to the threaded rod 22. However, it will be appreciated that the plug 42 may alternatively have a threaded surface 48 that is configured to engage only a single thread pitch.

It will be appreciated that the concept behind the hybrid threadform 120 may be extended to other types of engagers and couplers. Hybrid threadforms such as those described above may be formed on flat surfaces, curved surfaces, semicircular surfaces, or on the inside circular surface. The threadforms inside a fully circular surface may be within about 2% in their pitches. Threadforms on circular surfaces may be made for one half of the threadform cycle by use of custom tapered taps, with the smaller height threads located at the entrance of an opening to the surface. It will be appreciated that hybrid threadforms may be located on a wide variety of surfaces for mating with threaded surfaces.

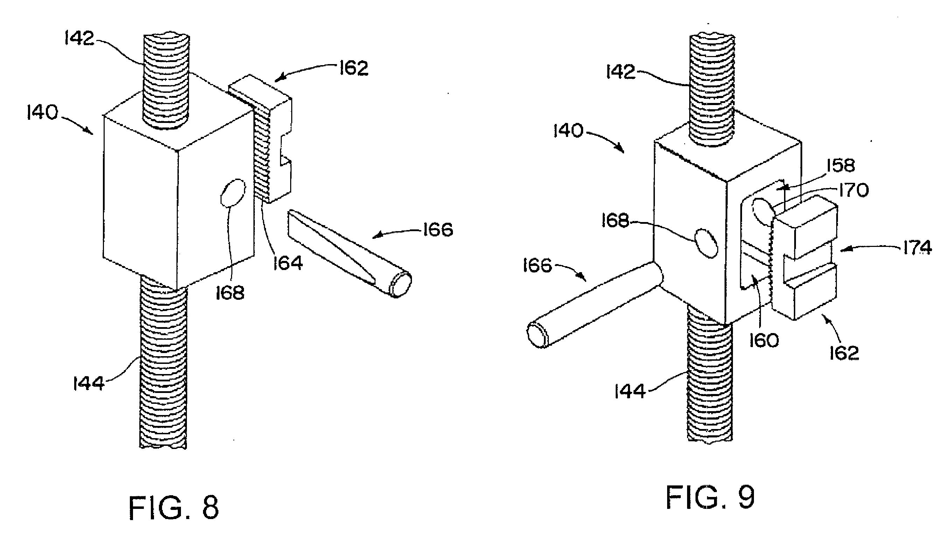

Figs. 8 and 9 shows an example of another type of connector, a connector 140 for connecting together a pair of threaded rod ends 142 and 144. The connector includes a connector body 146 having a top through hole 152 and a bottom through hole 154 into which the rod ends 142 and 144 are inserted. The rod ends 142 and 144 enter a hollow 158 inside the body 146. The hollow 158 is accessible from a back opening 160. A plug 162 having a threadform 164 on its front face is inserted into the opening 160. The threadform 164 may be a hybrid threadform such as that described above. The plug 162 is pressed against the rod ends 142 and 144, and secured by use of a wedge pin 166. The pin 166 passes through side holes 168 and 170 in the connector body 146, and engages a notch 174 in a back surface of the plug 162. The use of the plug 162 and the wedge pin 166 is similar to the use of the plug 42 (Fig. 1) and the wedge pin 44 (Fig. 1). It will be appreciated that other features of the connector 140 may be similar to corresponding features of the clamp 20, and that the variations described above with regard to the clamp 20 may also be suitable for the connector 140. The threadform 164 engages the threads on the rod ends 142 and 144 and thereby couples the rod ends 142 and 144 together. It will be appreciated that the connector 140 may be able to couple together rod ends having different thread pitch.

It will be appreciated that the connector 140 may also be used with a single threaded rod, acting as a nut to provide a fixed protrusion at the end of the rod or at another location along the threaded rod.

What follows now are various alternate embodiments of the invention. Many of the features of the alternate embodiment clamps described below may be similar to corresponding features of the clamp 20. Discussion of these similar features may be abbreviated or omitted in the below description of the alternate embodiment clamps, although it will be understood that the alternate embodiment clamps may include other features corresponding to those of the clamp 20. In addition, it will be appreciated that various features from the various embodiments may be combinable with one another.

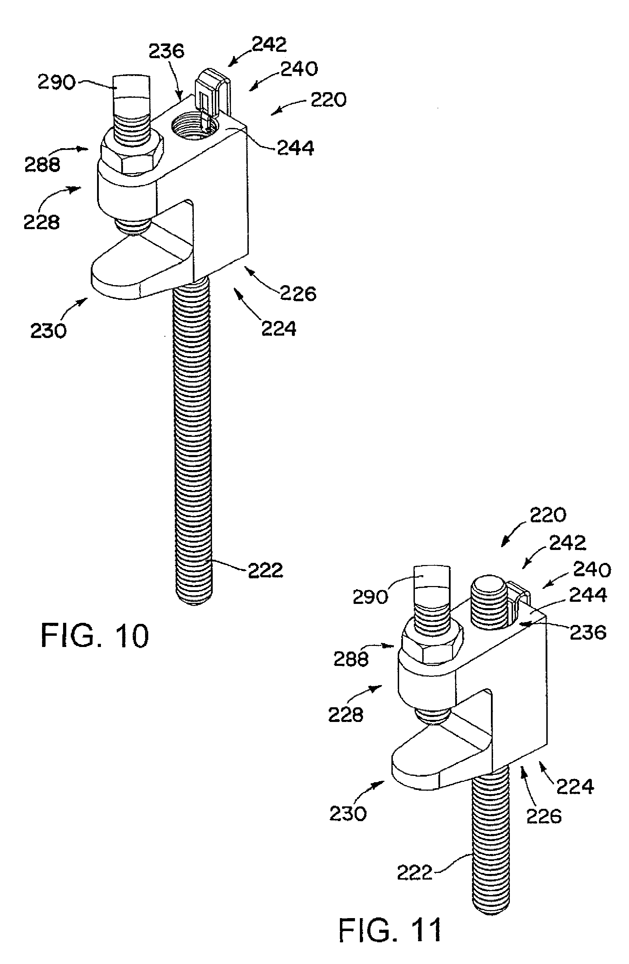

Figs. 10-13 show a clamp 220 with a different type of retaining mechanism 240 for coupling the clamp 220 to a threaded rod 222. Like the clamp 20 (Fig. 1), the clamp 220 has a clamp body 224 with a main body portion 226 having a top flange 228 and a bottom flange or platform 230 extending therefrom. The top flange 228 has a central threaded hole 288 for receiving a clamp screw 290. The main body portion 226 has a hollow 232 for receiving a portion 234 of the threaded rod 222.

Unlike the clamp 20 (Fig. 1), the clamp 220 has an oversize top hole 236 that is threaded. The oversize top hole 236 has a larger diameter than that of the threaded rod 222, such that the threaded rod 222 does not have to be screwed into the threaded top hole 236. Instead the top hole 236 is large enough to allow the threaded rod 222 to slide through. The top hole 236 may have the same thread pitch as the threaded rod 222.

The main body portion 226 has a bottom hole 238 that is unthreaded. Therefore the threaded rod 222 can slide through the bottom hole 238 as well. The top hole 236 has a larger radius than the bottom hole 238. The axes of the holes 236 and 238 do not coincide, rather the axes are separated by a distance substantially the same as the difference between the radii of the two holes 236 and 238. The holes 236 and 238 are located such that the farthest-inboard surfaces of the holes 236 are substantially coincident. That is, when the threaded rod portion 234 is in the holes 236 and 238 and as close to the flanges 228 and 230 as it can be, the threaded rod 222 may be substantially parallel to the axes of the holes 236 and 238.

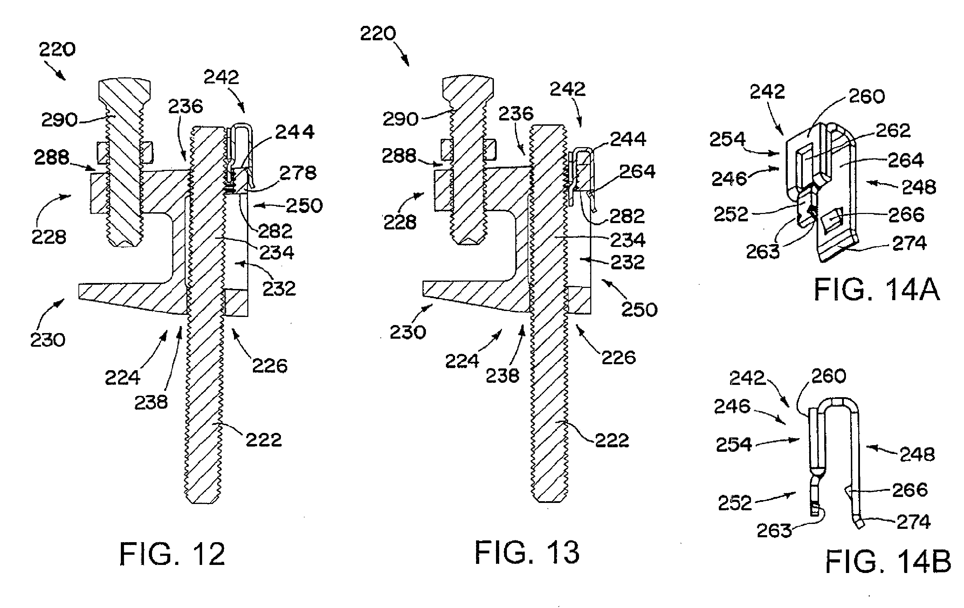

With reference now in addition to Figs. 14A and 14B, the clamp 220 includes a retaining mechanism 240, a retaining clip 242 that fits in part in the top hole 236, to press the threaded rod portion 234 against the threads on one side of the top hole 236. The retaining clip 242 fits over a top surface 244 of the main clamp body 226, with a front portion 246 of the clip 242 in the top hole 236, and a back portion 248 of the clip 242 in a back opening 250 in the main clamp body 226.

The clip front portion 246 includes a distal pilot end 252, and a proximal body 254 closer to the middle of the clip 242. The proximal body 254 is wider and thicker than the distal pilot end 252. The proximal body 254 may be a double thickness portion that is twice as thick as the pilot end 252. The pilot end 252 is a tongue that is cut from the middle of a second thickness layer 260 of the proximal body 254, leaving an opening 262 in the folded over second thickness layer 260. The pilot end 252 may be bent so as to be in substantially the same plane as the second thickness layer 260. The pilot end includes a pair of barbs 263 that are used to hold the clip 242 in place on the clamp body 224, prior to full installation of the clip 242.

The clip back portion 248 is substantially parallel to the clip front portion 246. The back portion 248 has a back portion body 264 with a cut out folded down tab 266 that is bent inward toward the front portion 246. The tab 266 has a flat tab end with sharp corners. The back portion body 264 has a bent bottom end 274 that is curved slightly outward to facilitate installation of the clip 242 on the main clamp body 226.

The clip 242 may be installed on the main clamp body 226 in a two-step process. In the first step, illustrated in Fig. 10 and 12, only the pilot end 252 is inserted into the top hole 236. The pilot end 252 is of insufficient width and thickness to push the threaded rod portion 234 into engagement with the threads of the oversize top hole 236. Therefore the threaded rod 222 is not engaged at this stage, and the relative positions of the rod 222 and the clamp 220 may be adjusted. However, the clip 242 is secured to the main clamp body portion 226 at this first step. The barbs 263 of the pilot end 252 engage threads of the top hole 236, securing the clip 242 against accidental dislodgement. Also, the bent tab 266 is resiliently bent as the clip is engaged with the main clamp body portion 226. One of the sharp corners of the back portion tab 266 presses against a clamp body back surface 278, also aiding in preventing dislodgement of the clip 242.

In the second step, illustrated in Fig. 11 and 13, the clip 242 is pushed further down onto the main clamp body portion 226. The back portion body 264, with its increased width and thickness, fills the void between the threaded rod portion 234 and one side of the top hole 236. This presses the threaded rod portion 234 into engagement with the threads on the other side of the top hole 236. The back portion tab 266 of the clip 242 enters the back opening 250 in the main clamp body portion 226. The tab 266 springs back to its original shape, with the tab end bearing against an inner surface 282 surrounding the back opening 250. This inhibits accidental dislodgement of the clip 242 from the clamp body 224.

The clamp body 224 may be cast, stamped, or formed by other suitable methods. The clip 242 may be stamped, or formed by another suitable method.

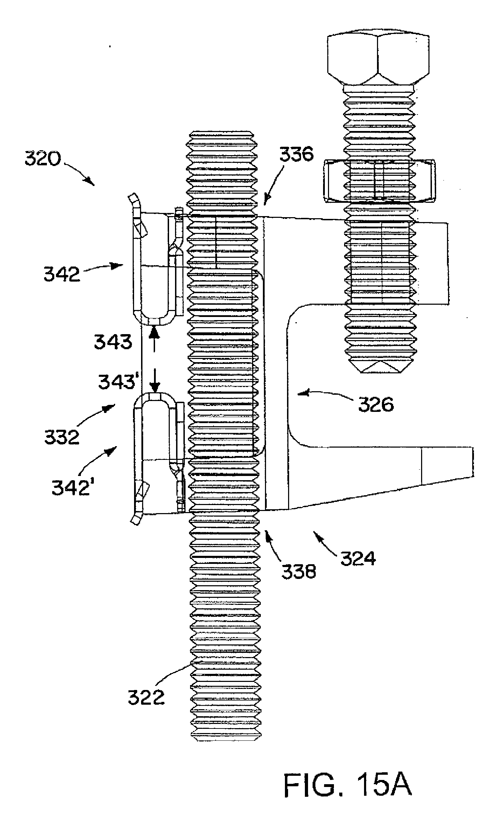

Figs. 15A-15I show further embodiments that utilize one or more clips to hold a threaded rod 322 in place relative to a clamp body 324 of a clamp 320. The clamp 320 is similar to the clamp 220 except that the clamp body 324 has oversized threaded holes 336 and 338 at both the top and bottom of a main body portion 326. Accordingly the description of features of the clamp 320 that are similar to those of the clamp 220 (and perhaps to other clamps described herein) may be omitted in the discussion below. Figs 15A-15I show various embodiments that utilize one or more clips to press the threaded rod 322 against the threads on one side of the threaded holes 336 and 338. Various features from the different embodiments, as well as from the embodiment described above in Figs. 10-14B, may be combined as appropriate in a single embodiment.

Fig. 15A shows an embodiment where a pair of clips 342 and 342', which may be substantially similar to the clip 242 (Figs. 14A and 14B). The clips 342 and 342' inserted into the threaded holes 336 and 338 from a hollow 332 in the clamp body 324. Force may be applied as shown at 343 and 343' to press the clips 342 and 342' into the threaded holes 336 and 338.

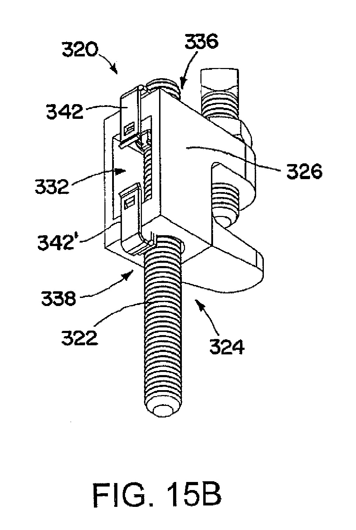

Fig. 15B shows an alternate configuration of the embodiment of Fig. 15A, with the clamp 320 having the clips 342 and 342' being inserted into the holes 336 and 338 from the opposite direction. The clips 342 and 342' are inserted from above and below the clamp body 324, the sides of the holes 336 and 338 opposite from the hollow 332.

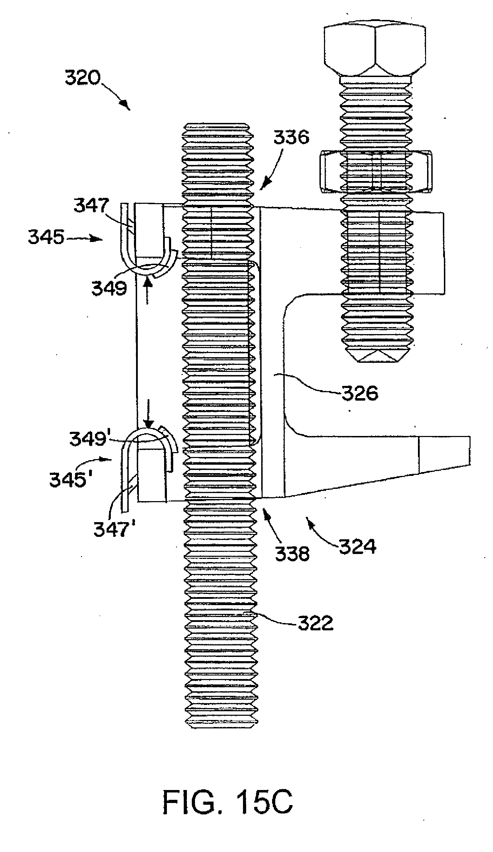

Fig. 15C shows an alternate embodiment clamp 320 with a pair of clips 345 and 345' that are engaged into the holes 336 and 338 in a manner similar to that of the clips 342 and 342', as shown in Fig. 15A. The clips 345 and 345' have respective tabs 347 and 347' used to hold the clips 345 and 345' in place prior to installation. The clips 345 and 345' have respective thickened or raised portions 349 and 349' that press against the threaded rod 322 when the clips 345 and 345' are fully installed in the holes 336 and 338, to press the threaded rod 322 against one side of the threads of the holes 336 and 338.

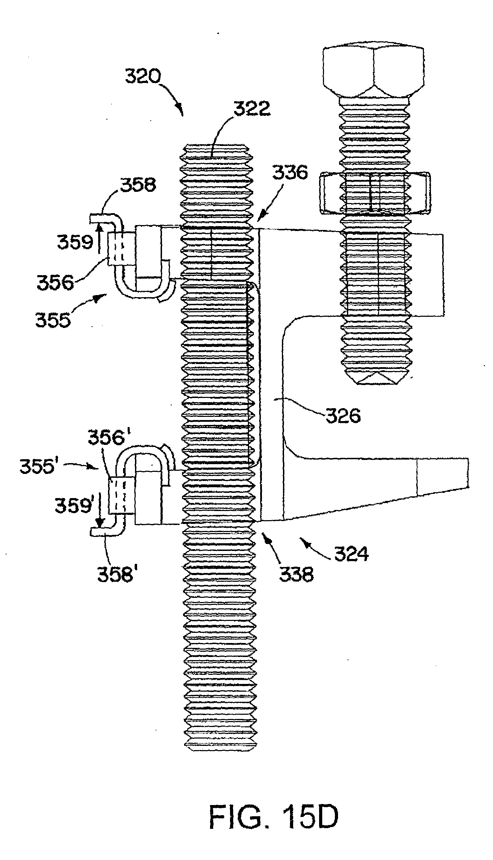

Fig. 15D shows an embodiment clamp 320 with clips 355 and 355' that are coupled to the main body portion 326 with by respective retainers 356 and 356'. The retainers 356 and 356' may be plastic or metal structures which enclose portions 355 and 355' to prevent the clips 355 and 355' from being physically separated from the clamp body 324. The parts if the clips 355 and 355' that engage the threaded rod 322 are similar to corresponding parts of the clips 345 and 345' (Fig. 15C). The clips 355 and 355' also have respective bent ends 358 and 358', at opposite ends from the parts of the clips 355 and 355' that engage the threaded rod 322, that can be pushed against as shown at 359 and 359', to engage the clips 355 and 355' in the threaded holes 336 and 338. The bent ends 358 and 358' also aid in retaining the clips 355 and 355' in the retainers 356 and 356'.

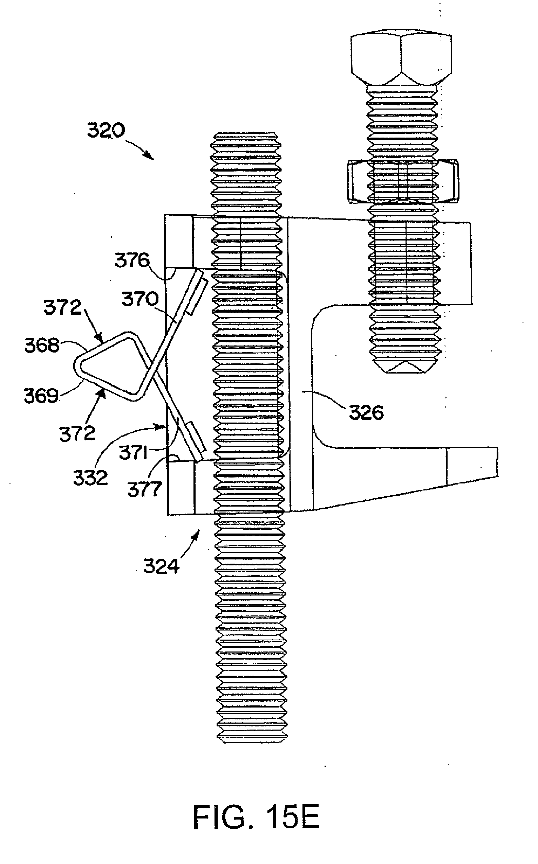

Fig. 15E shows a clip 365 that engages both of the holes 336 and 338, as part of still another embodiment of the clamp 320. The clip 365 includes pair of squeezable central portions 368 and 369, that may be squeezed together to disengage distal portions 370 and 371, as indicated at 372. This disengages the distal portions 370 and 371 from inner surfaces 376 and 377 of the clamp body 324 that face the hollow 332. The portions 368-371 of the clip 365 are bent portions of the same piece of material, all angled relative to each other. The central portions 368 and 369 are angled such that the distal portions 370 and 371 cross over and overlap one another. The distal portions 370 and 371 have thickened portions 378 and 379 that press against the threaded rod 322 when inserted into the holes 336 and 338. The thickened portions 378 and 379 may be folded over portions, or tabs or other parts deformed out of a plane of other parts of the distal portions 370 and 371. The clip 365 may be made of a suitable metal, such as spring steel, or another suitable material. The clip 365 may be initially placed in the hollow 332 with the distal portions 370 and 371 resting against the inner surfaces 376 and 377. After the clamp 320 is placed at a suitable location along the threaded rod 332 the central portions 368 and 369 may be squeezed together, allowing the distal portions 370 and 371 to be inserted into the holes 336 and 338. This engages the clamp body 324 to the threaded rod 322.

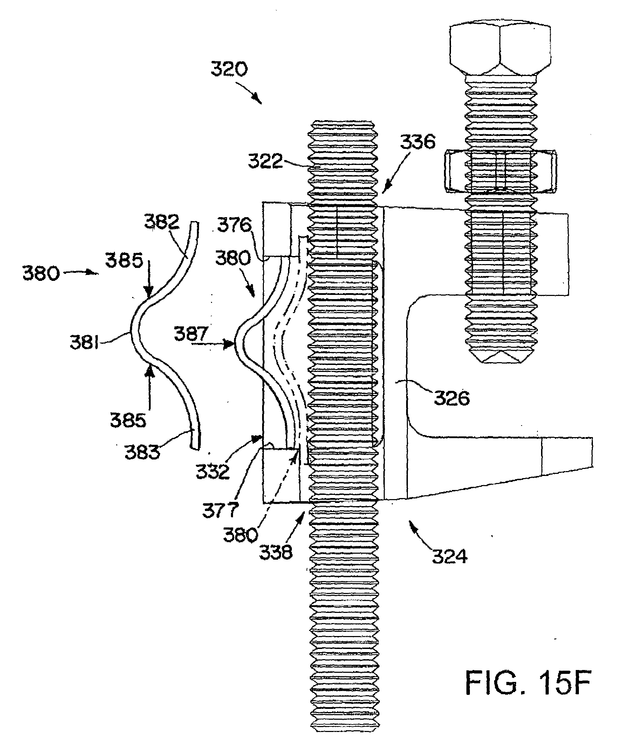

Fig. 15F shows an embodiment of the clamp 320 with a clip 380 having a curved shape. The clip 380 includes a central part 381 and two distal parts 382 and 383. The parts 381-383 are all parts of the same piece of material, for example being portions of the same sheet metal part. The central part 381 and the distal parts 382 and 383 have different signs for their curvatures, with the central part 381 for example having negative curvature, and the distal parts 382 and 383 having positive curvature.

Three positions for the clip 380 are shown in Fig. 15F. In the first (leftmost) position the clip 380 is fully disengaged from the clamp 320. Opposite portions of the central part 381 may be squeezed together, as at reference number 385, to compress the central part 381. This brings the distal parts 382 and 383 toward one another.

The compression allows the clip 380 to be preinstalled in the hollow 332, as shown in the middle position of the clip 380 in Fig. 15F. In the preinstalled position the tips of the distal parts 382 and 383 press outward against the inner surfaces 376 and 377. This (temporarily) holds the clip 380 in the hollow 332, out of engagement with the holes 336 and 338, while the clamp 320 is being positioned on the threaded rod 322. The clamp 320 may be sold to an end user with the clip 380 already in this postion.

After the clamp 320 is positioned relative to the threaded rod 322 the clip 380 is pushed inward at the central part 381, in the direction shown by reference number 387. This pushes the tips of the distal parts 382 and 383 past the inner surfaces 376 and 377, causing the distal parts 382 and 383 to enter the holes 336 and 338. The distal parts 382 and 383 press against the threaded rod 332, driving the threaded rod 332 into engagement with the opposite side of the threaded holes 336 and 338.

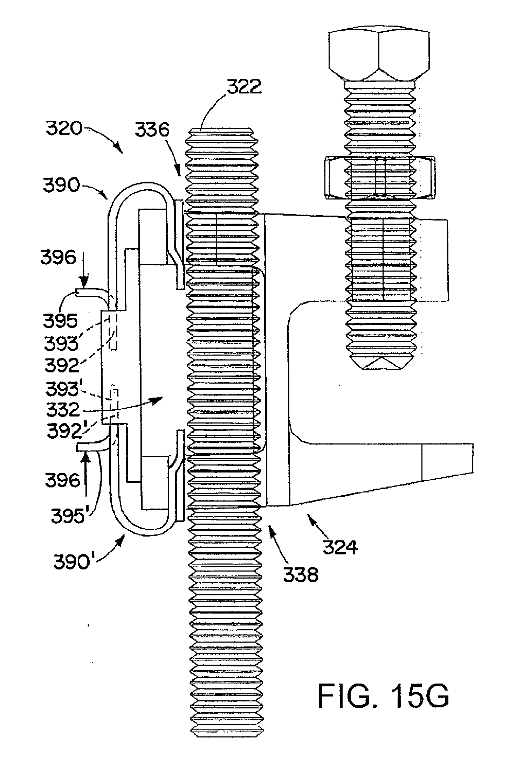

Turning now to Fig. 15G, an embodiment of the clamp 320 is shown with a pair of clips 390 and 390' in a retainer 391. The clips 390 and 390' enter the threaded holes 336 and 338 from the outside of the clamp 320, rather than through the hollow 332. This is similar to the engagement of the clip 242 in the clamp 220 (Fig. 10). The clips 390 and 390' may have engagement portions for engaging the holes 336 and 338 in a manner similar to the way that the clip 242 engages the threaded hole 236 (Fig. 10). Opposite ends 392 and 392' of the clips 390 and 390' are slidable within slots 393 and 393' at the top and bottom of the retainer 391. The clips 390 and 390' have bent ends 395 and 395' that are pushed together, as shown at 396, to fully engage the clips 390 and 390' in the threaded holes 336 and 338.

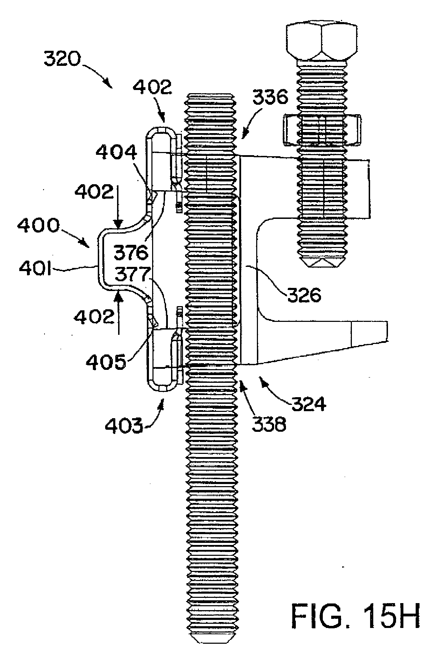

Fig. 15H shows an embodiment of the clamp 320 with a single-piece clip 400 that has a central part 401 that is squeezed inward at 402 to bring clip engagement portions 402 and 403 fully into threaded holes 336 and 338. There the clip engagement portions 402 and 403 engage the threaded rod 322. The clip engagement portions 402 and 403 may engage the threaded rod 322 in a manner similar to the way the clips 342 and 342' are shown engaging the threaded rod 322 in Fig. 15B. The clip 400 has tabs 404 and 405 that engage the clamp's inner surface 376 and 377. The tabs 404 and 405 operate in a manner similar to that of the tab 266 (Figs. 14A and 14B). The tabs 405 and 406 can be used to secure the clip engagement portions 402 and 403 in fully engaged positions within the threaded holes 336 and 338, engaging the threaded rod 322. The clamp 320 shown in Fig. 15H may be sold with the clip 400 already coupled to the clamp body 424, albeit not fully engaged in the threaded holes 336 and 338.

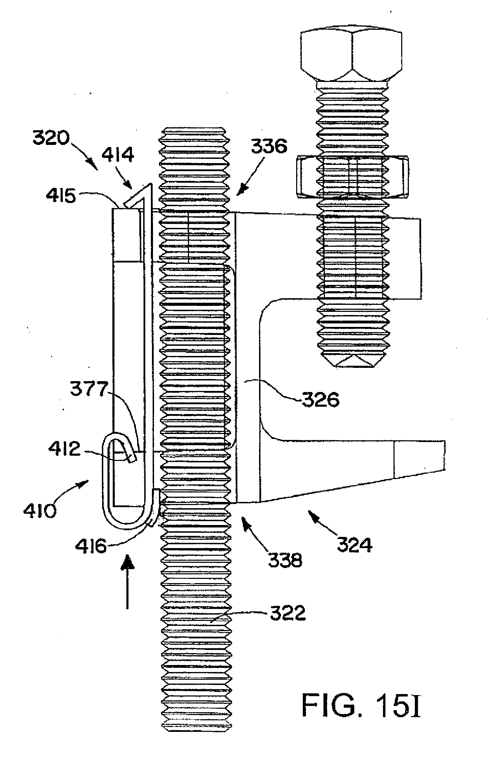

Fig. 15I shows an embodiment of the clamp 320 with a single-piece clip 410 that passes through both of the holes 336 and 338. The clip 410 has a hooked end 412 that presses against the inner surface 377 when the clip 410 is installed. An opposite barbed end 414 of the hook engages an outer surface 415 at the top of the clamp 320. A thickened or raised portion 416 of the clip 410 pushes against the threaded rod 322, engaging the threaded rod 322 against the threads of the threaded hole 338.

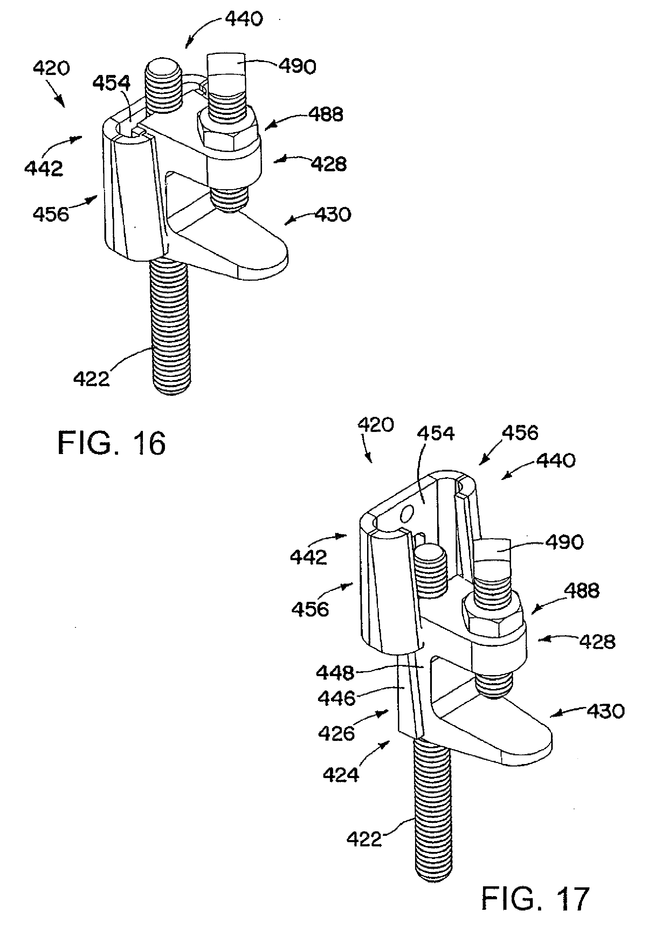

Turning now to Figs. 16-19, a clamp 420 has a retaining mechanism that involves clamping a threaded rod 422 between a main clamp body portion 426 and a retaining clip 442. As with the other clamp embodiments, the clamp 420 has a clamp body 424 with the main body portion 426 having a top flange 428 and a bottom flange or platform 430 extending therefrom. The top flange 428 has a central threaded hole 488 for receiving a clamp screw 490.

The main body portion 426 has an open back, with a semicircular channel 431 having a threadform 432. The threadform 432 may be a hybrid threadform, such as that described above. The threadform 432 may be a skipped tooth threadform, or may have other features that allow it to engage threaded rods with different thread pitches. The channel 431 receives a threaded rod portion 434 of the threaded rod 422. Alternatively the channel 431 can have other cross-section shapes, such as rectangular, and the threadform 432 may be on a flat surface. The threads of the threadform 432 may have a lead angle to match the threads of the threaded rod, or may be tangent and perpendicular to the rod. The pitch and thread height the threadform 432 may be constant or variable. The threads 432 of the channel 431 secure the threaded rod portion 434 when the threaded rod portion 434 is pressed into the threads 432 by a retaining mechanism 440.

The retaining mechanism 440 includes the clip 442, which slides onto the main body portion 426. The main body portion 426 includes a pair of wedge-shape or ramped protrusions 446 on side surfaces 448 of the main body portion 426. The protrusions 446 may be tapered at about 6° to provide a locking taper for holding the retaining clip 442 while it bears against the threaded rod portion 434, to push the threaded rod portion 434 into the threadform 432.

The clip 442 has a planar back 454, and a pair of curled ends 456. The curled ends 456 are configured to wrap around and engage the wedge-shape protrusions 446 of the main body portion 426. The ends 456 have sloped surfaces 460 that face the back 454. The sloped surfaces 460 bear against the protrusions 446 as the clip 442 is slid into engagement with the main body portion 426. The slope surfaces 460 may be tilted relative to the planar back 454 at about the same angle as the taper of the protrusions 446. The curled ends 456 have griping protrusions 462 that are directed inward toward a central plane of symmetry of the clip 442. The grips 462 are located near the bottom of the clip 442. The grips 462 bear against the clamp body side surfaces 448 when the clip 442 is even partially slid onto the main body 426. The grips 462 are used to hold the clip 442 on the main body portion 426 prior to full installation of the clip 442.

The planar back 454 has a tab 464 and a pair of holes 466. The tab 464 is bent inward, toward the threaded rod portion 434 when the clip 442 is engaged with the clamp body 424. When the clip 442 is fully installed on the clamp main body portion 426, the tab 464 engages the threads of the rod portion 434, helping to secure the clip 442 in the fully engaged position.

To install the clamp 420 the desired threaded rod portion 434 is placed in the channel 431 of the clamp body 424. The clip 442 is then slid onto the main body portion 426, with the sloped surfaces 460 engaging the wedge-shape protrusions 446. When the clip is only slid only slightly onto the main body portion 426, the back 454 of the clip 442 does not bear against the threaded rod 422. In this position the position of the clamp 420 along the threaded rod 422 can be adjusted, such as for fine adjustment of relative position of the clamp 420 and the rod 422. The grips 462 hold the clip 442 onto the main body portion 426 during this adjustment. The rod portion 434 can be fully secured to the clamp 420 by sliding the clip 442 further into engagement with the main body portion 426. The further that the clip 442 is slid onto the main body portion 426, the closer the clip back 454 is pulled toward the channel 431. Eventually clip back 454 bears against the threaded rod portion 434 and presses the threads of the rod portion 434 into engagement with the threadform 432 of the channel 431. While the clip 442 is slid onto the clamp body 424 the tab 464 comes into engagement with the threads of the rod portion 434, ratcheting along the individual threads of the rod portion 434. This engagement between the tab 464 and the rod 422 is on an opposite side of the rod portion 434 from the engagement with the channel threadform 432. The engagement between the tab 464 and the threads of the rod portion 434 aids in securing the clip 442 in place in its installed configuration.

The main securing between the rod 422 and the clamp 420 is in the engagement of the threads of the rod portion 434 and the threadform 432 in the channel 431. The clip 442 functions primarily to press the rod portion 434 into the channel 431. Thus most of the load holding the rod 422 is borne by the clamp body 424.

The clamp body 424 may be cast, stamped, or formed by another suitable method. The retaining clip 442 may be cast or stamped, or be made by other suitable manufacturing processes.

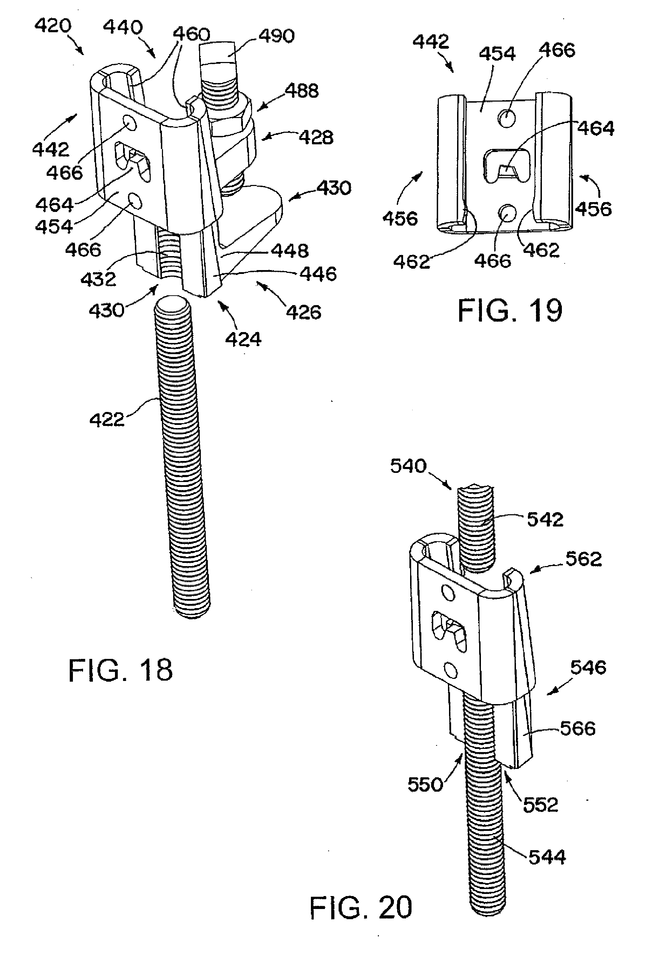

Fig. 20 shows an example of another type of connector, a connector 540 for connecting together a pair of threaded rod ends 542 and 544. The connector includes a connector body 546 having a channel 550 with a threadform surface 552. The rod ends 542 and 544 are placed in the channel 550. A clip 562 slides over the rod ends 542 and 544, engaging wedge-shape protrusions 566 on side surfaces of the connector body 546. The clip 562 presses the rod ends 542 and 544 into engagement with the threads of the threadform surface 552, securing the rod ends 542 and 544 together. The engagement of the clip 562 and connector body 546 may be similar to that of the engagement of the clip 442 (Fig. 16) and the clamp main body portion 426 (Fig. 16). Other features and variations of the clamp 420 (Fig. 16) may also have counterparts in the connector 540. It will be appreciated that the connector 540 may be able to couple together rod ends having different thread pitch, for example by use of a hybrid threadform, or by use of different threadforms in different parts of the channel 550.

It will be appreciated that the connector 140 may also be used with a single threaded rod, acting as a nut to provide a fixed protrusion at the end of the rod or at another location along the threaded rod.

The clamps and connectors described above have many advantages over prior clamps and connectors. There is reduced time needed by the installer to position the threaded rod within the beam clamp or connector, by allowing direct positioning of the rod without threading it in. The clamps and connectors allow an installer the ability to quickly insert a threaded rod and make rough adjustments, while also allowing the installer to make finer, final adjustments as part of the installation process, or after initial installation. A plastic carrier may be used to secure together during shipping and/or installation the various individual parts of the various clamps and connectors described herein, thereby avoiding having loose parts. In addition, clamps and connectors also reduce time and effort by allowing the user to avoid dressing the end thread of a threaded rod. End burrs do not affect the installation of the clamps and connectors described herein. A further advantage is that creating a large end burr or crimping the end threads can eliminate the need for a locking nut on the threaded rod. This is because the damage to the end of the thread in essence creates its own locking mechanism.

Although the invention has been shown and described with respect to a certain preferred embodiment or embodiments, it is obvious that equivalent alterations and modifications will occur to others skilled in the art upon the reading and understanding of this specification and the annexed drawings. In particular regard to the various functions performed by the above described elements (components, assemblies, devices, compositions, etc.), the terms (including a reference to a "means") used to describe such elements are intended to correspond, unless otherwise indicated, to any element which performs the specified function of the described element (i.e., that is functionally equivalent), even though not structurally equivalent to the disclosed structure which performs the function in the herein illustrated exemplary embodiment or embodiments of the invention. In addition, while a particular feature of the invention may have been described above with respect to only one or more of several illustrated embodiments, such feature may be combined with one or more other features of the other embodiments, as may be desired and advantageous for any given or particular application.

## Claims

1. A clamp comprising:
a clamp body having a threaded hole; and
a retainer clip that fits into the hole to push a threaded rod against one side of the threaded hole.

2. The clamp of claim 1, wherein the clip fits over a top surface of the clamp body.

3. The clamp of claim 1, wherein the clip has a front portion and a back portion; and
wherein the clip front portion has a pilot end and a proximal body, wherein the pilot end is one or more of narrower than the proximal body and thinner than the proximal body.

4. The clamp of claim 3, wherein the pilot end has one or more protrusions to engage the threaded rod.

5. The clamp of claim 4, wherein the one or more protrusions includes one or more barbs or lances.

6. The clamp of claim 4, wherein the one or more protrusions engage threads of the threaded hole when only the pilot end is inserted in the threaded hole.

7. The clamp of claim 1,
in combination with the threaded rod;
wherein the threaded rod is free to move through the threaded hole when only the pilot end is inserted into the threaded hole;

8. The clamp of claim 1,
wherein the back portion has a tab; and
wherein the back portion tab engages a surface of the clamp body when the clip is fully installed on the clamp body.

9. The clamp of claim 1, wherein the clamp body has a smooth hole, in addition to the threaded hole, that the threaded rod passes through.

10. The clamp of claim 9, wherein the threaded hole has a larger radius than the smooth hole.

11. The clamp of claim 9, wherein the threaded hole has its axis offset from that of the smooth hole.

12. The clamp of claim 1, in combination with the threaded rod.

13. The clamp of claim 1, wherein the clamp body has a main body portion with a top flange and a bottom flange extending therefrom.

14. The clamp of claim 1,
wherein the clamp body has an additional threaded hole; and
wherein the threaded rod is pushed against one side of the additional threaded hole by either the retainer clip or an additional retainer clip.

15. A method of coupling a threaded rod and a clamp body, the method comprising:
inserting the threaded rod into a threaded hole of the clamp body; and
securing the threaded rod to threads on one side of the threaded hole with a portion of a clip that is inserted into the threaded hole.
